# FASCICULE DE BREVET EUROPEEN

(11) **EP 0 625 080 B1**
(45) Date de publication et mention de la délivrance du brevet: **12.03.1997**
(21) Numéro de dépôt: 94902006.9
(22) Date de dépôt: 09.12.1993
(51) Int. Cl.: B23B 51/02

(54) **FORET HELICOIDAL DE PRECISION**
Präzisionsspiralbohrer
PRECISION TWIST DRILL

(30) Priorité: 09.12.1992 FR 9214820
(43) Date de publication de la demande: 23.11.1994
(73) Titulaire: ETABLISSEMENTS RECOULES ET FILS (S.A), 77330 Ozoir-La-Ferrière (FR)
(72) Inventeur: BOUZOUNIE, Lucien, F-77340 Pontault-Combault (FR)
(74) Mandataire: Viard, Jean
(86) Numéro de dépôt international: FR9301214
(87) Numéro de publication internationale: WO9413421

(56) Documents cités:
- EP-A- 0 088 037
- DE-U- 8 420 350
- FR-A- 2 656 554
- US-A- 4 116 580
- US-A- 5 141 369

## Description

La présente invention a pour objet un foret hélicoïdal de précision selon le préambule de la revendication et comme connu du document US-A-4 116 580.

Les forets sont bien connus et utilisés depuis très longtemps pour percer des trous cylindriques. On sait qu'un foret présente de bas en haut une pointe qui centre l'outil et se prolonge par deux dents hélicoïdales bordées chacune par un listel, les dents étant séparées par des goujures de même hélice qui reçoivent et évacuent, généralement vers le haut, les copeaux du métal coupé.

Malheureusement, la précision obtenue lors d'un tel perçage est de l'ordre de un dixième de millimètre et lorsqu'une précision supérieure déterminée est requise ou lorsqu'un état de surface de bonne qualité est indispensable, une opération ultérieure d'alésage doit être effectuée pour améliorer le trou percé par le foret. C'est à dire que l'on perce un avant trou et que l'on alèse celui-ci à l'outil ou à l'alésoir pour obtenir le plus couramment la qualité finale (H7-H8). Lorsque le nombre de trous à percer est important il en résulte une perte de temps qui se répercute sur les coûts de production.

La présente invention a pour objet de pallier cet inconvénient et d'obtenir un outil permettant de percer directement et sans reprise ni bavures à une tolérance inférieure ou égale à 0,03 millimètre avec un état de surface inférieur à 0,8 micron Ra. Ce résultat est obtenu par la définition d'une géométrie et d'un état de surface rigoureux de l'outil.

Le document US-A- 4 116 580 divulgue un foret du même type, présentant une géométrie particulière à une pente et une piqûre, comprenant un corps de forme générale cylindrique dont une extrémité est conformée en cône, présentant des goujures hélicoïdales s'étendant sur le corps cylindrique, ledit corps ayant un axe de rotation passant par le sommet du cône d'extrémité, le corps cylindrique présentant deux bords hélicoïdaux espacés par le goujures, se terminant à l'avant du forêt par deux dents affûtées, dans lequel toutes les arêtes sont coupantes. Cette caractéristique a pour but de réduire les efforts de coupe ce qui se traduit par un échauffement moindre et par une résistance moindre à la coupe ce qui permet de diminuer les temps d'usinage. La présente vise moins à réduire le temps d'usinage qu'à améliorer la précision du résultat obtenu et des arêtes coupantes ne sont prévues qu'aux endroits essentiels à savoir, les arêtes des deux dents avant et les arêtes des piqûres.

Selon la présente invention, le forêt comprenant un corps de forme générale cylindrique dont une extrémité est conformée en cône, présentant des goujures hélicoïdales s'étendant sur le corps cylindrique, ledit corps ayant un axe de rotation passant par le sommet du cône d'extrémité, le corps cylindrique présentant deux bords hélicoïdaux, espacés par le goujures, se terminant à l'avant du forêt par deux dents affûtées caractérisé en ce que :
- chaque dent avant présente deux pentes et une piqûre, chaque piqûre étant rayonnée dans la goujure 1/3 du côté de l'arête et 2/3 du côté de la goujure de manière à avoir une arête de coupe positive ;
- les bords hélicoïdaux du corps présentent un listel cylindrique de 0,1 à 0,2 mm. de large ;
- le diamètre extérieur de l'outil est supérieur de 0,005 mm. au diamètre nominal du trou à percer;
- les arêtes coupantes de chaque dent et des piqûres sont exactement centrées par rapport au sommet du cône;
- toutes les surfaces de l'outil sont polies à une précision inférieure à + 0,1 microns Ra.

C'est la détermination de cet ensemble de paramètres qui a permis d'obtenir le résultat recherché lorsqu'ils sont simultanément présents.

Le polissage des surfaces des goujures, des dépouilles et listels facilite l'évacuation des copeaux qui n'altèrent pas le surface interne du trou.

L'outil peut, bien entendu, être en acier rapide ou en tout autre matériau utilisé habituellement pour le perçage des trous tel que du carbure de tungstène, de la céramique etc...

D'autres caractéristiques et avantages de l'invention apparaîtront au cours de la description qui va suivre, d'un mode particulier de réalisation donné à titre d'exemple non limitatif, en regard des figures qui représentent :
- la figure 1, un foret selon l'invention vu par l'avant;
- la figure 2, l'avant du foret selon la direction II de la figure 1;
- la figure 3, l''avant du foret selon la direction III de la figure 1;
- la figure 4, l'avant du foret selon la direction IV de la figure 1.

Sur les figures , on voit que la partie avant du foret comprend deux arêtes coupantes 1 et 2 affûtées selon deux pentes, avec, sur le diamètre extérieur, un listel 3.

Selon une des caractéristiques de l'invention, la largeur du listel est très faible et est de l'ordre de 0,1 à à 0,2 millimètres. Chaque piqûre 4 en bout est une piqûre rayonnée dans l'axe de l'outil et de la goujure 5 et dans le sens de l'hélice de manière à ce que ses arêtes de coupe positive soient réparties selon environ la proportion d'un tiers du coté de l'arête coupante et de deux tiers du coté des goujures 5.

Les arêtes coupantes 4 bis des deux piqûres 4 doivent être symétriques par rapport au centre de l'outil , à épaisseur constante comme référence. La pointe de l'outil doit être exactement au centre de l'outil.

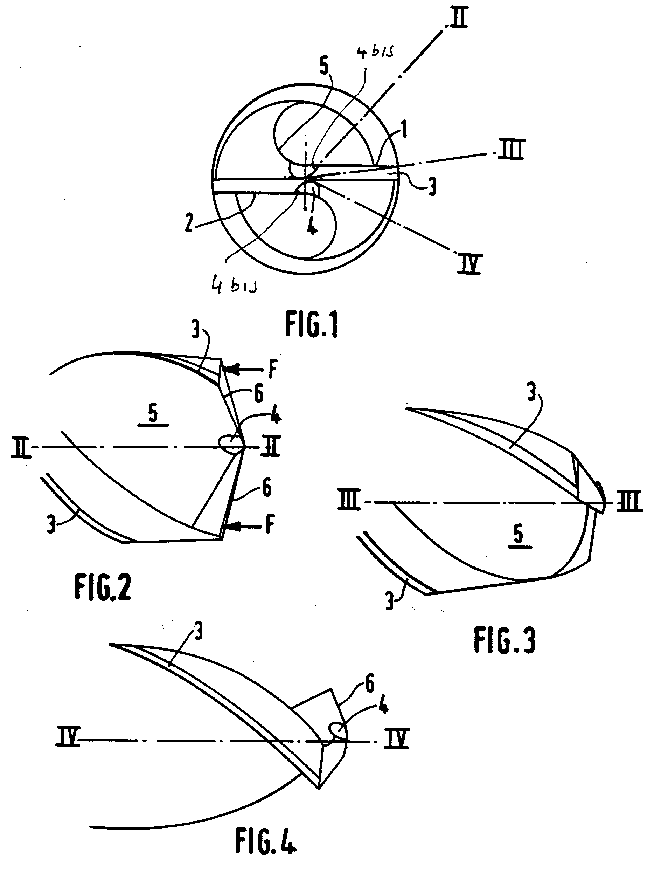

Comme cela est symbolisé part les flèches F, sur la figure 2, la partie avant 6 des dents 1 et 2 doit être au même niveau c'est à dire qu'aucune lèvre ne doit être devant l'autre de sorte que l'attaque du métal à percer par les deux dents soit parfaitement simultanée. Cette vérification est effectuée à l'aide d'un comparateur, l'outil subissant une rotation de 90°. Les deux mesures doivent être identiques c'est à dire que le devant des dents est nul.

Il va de soi que de nombreuses variantes peuvent être apportées, notamment par substitution de moyens techniquement équivalents, sans sortir pour cela du cadre de l'invention.

## Revendications

1. Foret comprenant un corps de forme générale cylindrique dont une extrémité est conformée en cône, présentant des goujures (5) hélicoïdales s'étendant sur le corps cylindrique, ledit corps ayant un axe de rotation passant par le sommet du cône d'extrémité, le corps cylindrique présentant deux bords hélicoïdaux espacés par le goujures, se terminant à l'avant du forêt par deux dents (1,2) affûtées
caractérisé en ce que :
- chaque dent avant (1,2) présente deux pentes et une piqûre (4), chaque piqûre (4) étant rayonnée dans la goujure 1/3 du côté de l'arête et, 2/3 du côté de la goujure de manière à avoir une arête de coupe positive ;
- les bords hélicoïdaux du corps présentent un listel (3) cylindrique de 0,1 à 0,2 mm. de large ;
- le diamètre extérieur de l'outil est supérieur de 0,005 mm. au diamètre nominal du trou à percer;
- les arêtes coupantes de chaque dent ( 1,2) et des piqûres (4) sont exactement centrées par rapport au sommet du cône;
- toutes les surfaces de l'outil sont polies à une précision inférieure à+ 0,1 microns Ra

## Claims

1. A drill bit comprising a generally cylindrical-shaped body having one end in the shape of a cone, presenting helical grooves (5) extending over the cylindrical body, said body having an axis of rotation passing through the tip of the end cone, the cylindrical body presenting two helical edges separated by the grooves, and terminated at the front of the drill bit by two sharpened teeth (1, 2),
the drill bit being characterized in that:
each front tooth (1, 2) presents two slopes and a pit (4), each pit (4) radiating into the groove, one-third on the edge side and two-thirds on the groove side so as to have a cutting positive-section edge;
the helical edges of the body presenting a cylindrical land (3) of width 0.1 mm to 0.2 mm;
the outside diameter of the tool is 0.005 mm greater than the nominal diameter of the hole to be drilled;
the cutting edges of each tooth (1, 2) and of the pits (4) are exactly centered relative to the tip of the cone; and
all of the surfaces of the tool are polished to within an accuracy of less than +0.1 microns Ra.

## Patentansprüche

1. Bohrer mit einem im wesentlichen zylindrischen Körper, dessen eines Ende konisch ausgebildet ist und der mit wendelförmigen Spannuten (5) versehen ist, die sich längs des zylindrischen Körpers erstrecken, wobei dieser Körper eine Rotationsachse aufweist, die sich durch die Spitze des Endkonus erstreckt und wobei der zylindrische Körper (2) wendelförmige und durch die Spannuten voneinander auf Abstand gehaltene Kanten besitzt, die mit zwei Schneid-Zähnen (1, 2) am vorderen Ende des Bohrers enden, dadurch gekennzeichnet, daß jeder vordere Zahn (1, 2) zwei Schrägen und einen Einstich (4) aufweist, daß jeder Einstich (4) sich strahlenförmig zu einem Drittel in die Spannute auf der Seite der Kante und zu zwei Drittel auf der Seite der Spannute derart ausbreitet, daß er eine positiv schneidende Kante bildet, daß die wendelförmigen Kanten des Körpers eine zylindrische Führungsfase (3) aufweisen, mit einer Breite zwischen 0,1mm und 0,2mm, daß der äußere Durchmesser des Werkzeuges um 0,005mm größer ist als der nominelle Durchmesser des zu bohrenden Loches, daß die Schneidkanten jedes Zahnes (1, 2) und die Einstiche (4) exakt in der Spitze des Konus zentriert sind und daß alle Oberflächen des Werkzeuges mit einer Genauigkeit kleiner als +0,1 micron Ra poliert sind.
